# EUROPEAN PATENT SPECIFICATION

(11) **EP 1 760 427 B1**
(45) Date of publication and mention of the grant of the patent: **01.07.2009**
(21) Application number: 06254365.7
(22) Date of filing: 18.08.2006
(51) Int. Cl.: G01B 21/20, G01B 11/28

(54) **Methods for measuring the nozzle flow area between gas turbine engine vanes**
Verfahren zur Messung des durchströmten Querschnitts zwischen den Leitschaufeln von Gasturbinen
Procédés de mesure de la zone de flux entre les aubes fixes d'une turbine à gaz

(30) Priority: 31.08.2005 US 216793
(43) Date of publication of application: 07.03.2007
(73) Proprietor: United Technologies Corporation, Hartford, CT 06101 (US)
(72) Inventor: Vaidyanathan, Janakiraman, South Windsor Connecticut 06074 (US)
(74) Representative: Leckey, David Herbert

(56) References cited:
- GB-A- 2 058 373
- US-A- 5 521 847
- US-A1- 2002 193 897

## Description

### BACKGROUND OF THE INVENTION

### (1) FIELD OF THE INVENTION

The preferred embodiment of the present invention relates to gas turbine engines, and more particularly to methods for measuring the nozzle flow area between vanes in such engines.

### (2) DESCRIPTION OF THE RELATED ART

A typical axial flow gas turbine engine operates by compressing ambient air in one or more forward compressors, injecting fuel and burning the mixture in a central combustor, and directing the products of combustion through one or more rearward turbines. The compressors and turbines each comprise alternating stages of rotor blades and stator vanes distributed circumferentially about one or more rotating spools and stationary cases respectively. A common low-pressure spool allows the forward compressor and the rearward turbine to rotate in unison, while a common high-pressure spool allows the rearward compressor and forward turbine to rotate in unison. The turbines convert kinetic energy stored in the combustion gas into mechanical energy for powering the forward compressors. The operation of the turbines directly influences the operation of the compressors, since common spools connect them.

The products of combustion flow rearward through a plurality of individual, semi-annular nozzle areas disposed between adjacent stator vanes. The semi-annular nozzle area is often referred to as the flow area. It is important that the total nozzle flow area of each turbine stage is properly sized to allow the turbines and compressors to operate at their optimum efficiency. It is also important to evenly distribute the individual nozzle flow areas circumferentially to reduce high cycle fatigue on the following blade stage due to combustion gas pulsing.

Because of original part manufacturing tolerances, extended engine operation and subsequent restoration processes, the individual nozzle areas will vary. In order to ensure the total nozzle flow area and individual nozzle flow area distribution are within engine specifications, each individual nozzle flow area must be measured prior to assembly in a turbine. A new or restored vane is typically mounted in a mechanical gage, where a series of mechanical probes contact the vane profile in a few locations on the vane surfaces. The distances between select locations on the vane profile and a nominally sized, adjacent vane is measured by the gage. The individual nozzle flow area is then typically calculated using the Simpson's Rule for calculating the area of a trapezoid. Vanes with nozzle flow areas falling within a pre-determined range of values are assigned a classification number. An algorithm optimizes the circumferential distribution of all the vanes in the stage based on specific engine criteria. Vanes are then assembled circumferentially in a turbine stage so that the difference in classification number between adjacent vanes is no more than one classification number.

While it is possible to calculate the nozzle flow area of new vanes using the Simpson's Rule method as described above, the calculation is only an approximation of the actual nozzle flow area, using only a few measured points. For restored vanes, there are even more obstacles to overcome in order to approximate the nozzle flow area using the Simpson's Rule method. Restored vanes may bow slightly during extended operation in the hot environment of a turbine, and restoration processes may shift the vane's datum locations or thin the nozzle walls from blending. It is difficult to properly locate restored vanes in a mechanical gage in a repeatable manner, and only a few measured locations may not accurately reflect subtle changes in the nozzle wall profile. The resulting classification number represents a range of areas and is not an accurate representation of the actual nozzle flow area of the restored vane.

What are therefore needed, are more accurate methods of measuring the nozzle flow area between vanes in gas turbine engines.

Prior art methods for determining nozzle throat areas are disclosed in US 2002/0193897 and GB 2058373.

### BRIEF SUMMARY OF THE INVENTION

The present invention is defined by claim 1.

According to a preferred embodiment, in a turbine vane nozzle flow area measurement method, a convex surface and a concave surface of a first vane are scanned using a laser scanning system. A laser scanning system comprises a laser spot projector, a laser spot sensor, a multi-axis controller and a computer. A series of scanned points are stored as point clouds with the system. The point clouds are combined and translated into a reference coordinate system. A point cloud representing a nominally sized vane is positioned adjacent to one surface of the combined point cloud. An inlet profile is extracted from the intersection of a nozzle inlet plane located perpendicular to the combustion gases and the leading edge of each point cloud. A nozzle flow area is then accurately calculated using integration techniques from the inlet profile. The process is repeated for the other side of the vane.

In another turbine vane nozzle flow area measurement method, not according to the present invention, both a pressure side nozzle wall and a suction side nozzle wall of a first vane are scanned and stored as a first point cloud using the laser scanning system. Then, both a pressure side nozzle wall and a suction side nozzle wall of a second vane are scanned and stored as a second point cloud using the system. A nozzle flow area is then measured between each adjacent point cloud using integration techniques. The scanning and storing steps are repeated for each vane in a turbine stage.

### BRIEF DESCRIPTION OF THE SEVERAL VIEWS OF THE DRAWINGS

FIG. 1 is a partial sectional view illustrating a typical turbine section of an axial flow gas turbine engine.
FIG. 2 is a partial perspective view illustrating a portion of a first stage of vanes of the turbine section of FIG. 1.
FIG. 3 is a simplified perspective view illustrating a laser scanning system of the type used to scan the vanes of FIG 2.
FIG. 4 is a schematic diagram detailing various steps according to a method of the present invention.
FIG. 5a is a perspective view illustrating a point cloud representing a convex surface of a first-stage vane of FIG. 2.
FIG. 5b is a perspective view illustrating a point cloud representing a concave surface of a first-stage vane of FIG. 2.
FIG. 6 is a perspective view illustrating a combined point cloud scan of a first vane of the first-stage of FIG. 2 positioned adjacent to a point cloud scan of a nominal vane.
   When referring to the above listed drawings, like reference numerals designate identical or corresponding elements throughout the various views.

### DETAILED DESCRIPTION OF THE INVENTION

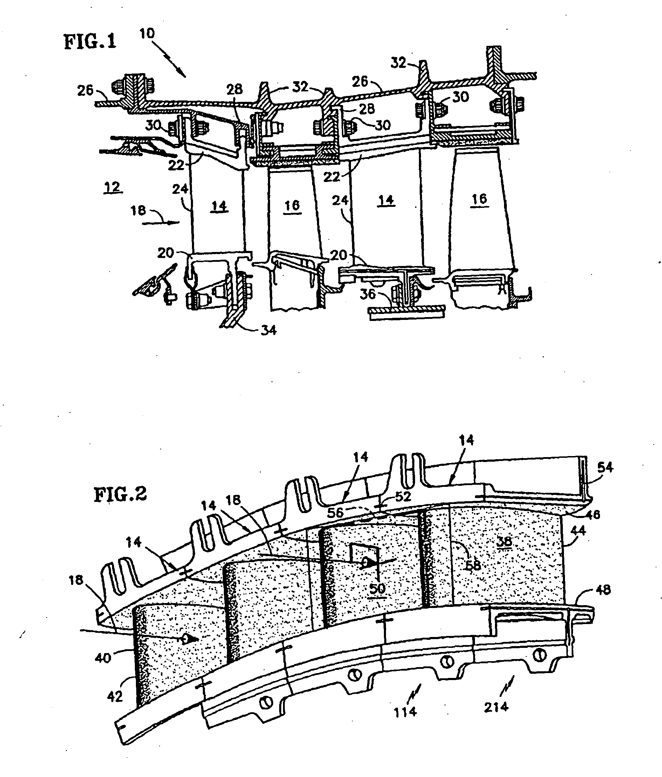

In a typical axial-flow gas turbine engine, one or more turbine stages 10, as illustrated in FIG. 1, are disposed downstream of a centrally mounted combustor 12. Alternating stages of stationary vanes 14 and rotating blades 16 direct products of combustion 18 in the form of hot gases, rearward, imparting a tangentially directed force on the blades 16.

Individual vanes 14 are disposed circumferentially around the turbine 10, and each vane 14 comprises an inner diameter shroud 20, an outer diameter shroud 22 and an airfoil 24 spanning radially there between. The vanes 14 are cantilevered inward by their outer shrouds 22 from an outer case 26, circumscribing the turbine 10. A combination of supports 28 and threaded fasteners 30 secure the outer shrouds 22 to the case 26 radially beneath a number of external flanges 32. Additionally, the inner shrouds 20 may be secured to an inner support 34 or may carry an inter-stage seal 36.

Referring now to FIG. 2, each airfoil 24 comprises a convex surface 38 and an opposite concave surface 40 (not shown) extending axially between a forward, leading edge 42 and a rearward, trailing edge 44. The convex 38 and concave 40 surfaces extend radially between an outer diameter end wall 46 and an inner diameter end wall 48. The convex 38 and concave 40 surfaces and outer 46 and inner 48 end walls of adjacent vanes 14 form a nozzle 50 for directing the combustion gases 18 rearward. Thin metal strips 52 disposed in matching slots 54 to restrict leakage of the combustion gases 18 from the nozzles 50 in the inner and outer radial directions.

A nozzle 50 cross sectional flow area is measured between a first 114 and a second 214 adjacent vane in a turbine stage. An inlet profile 56 is extracted from the intersection of a plane 58, positioned perpendicular to the mean combustion gas 18 flow vector direction, and the leading edges 42, end walls 46, 48 of adjacent vanes 114, 214.

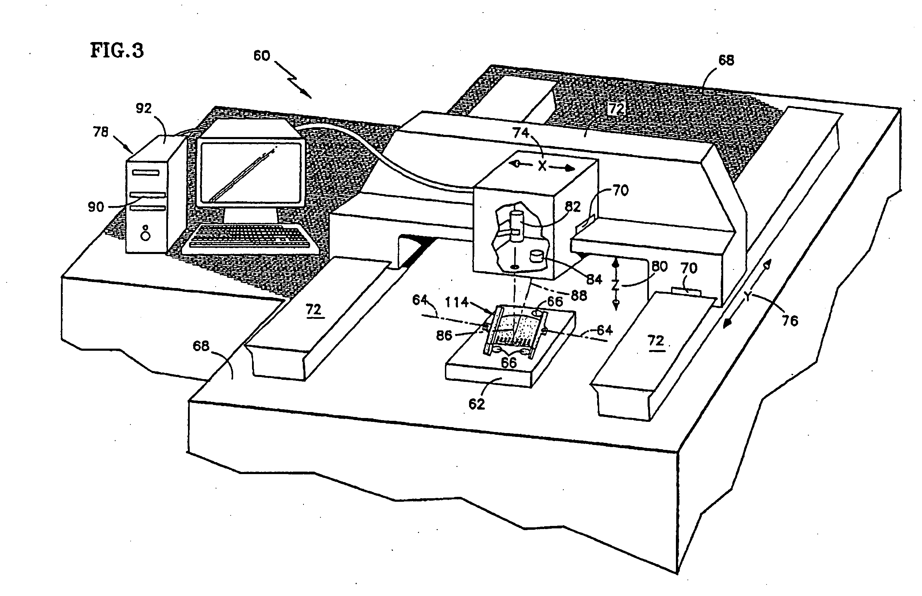

A laser scanning system 60 for measuring the flow area of a nozzle 50 is illustrated in FIG. 3. A first vane 114 of a turbine stage is located in a stationary fixture 62 according to one or more preexisting vane datum 64, with the airfoil 24 and end walls 46, 48 oriented for maximum exposure to the system 60 occultation-free. The use of an accurate fixture 62 is extremely important, since the resulting area is measured, calculated and stored in relation to the one or more datum 64. One or more spheres 66 may be located in relation to the datum 64 to aid in positioning as the first vane 114 is scanned by the system 60. In the exemplary method, three spherical tooling balls are affixed to the vane endwalls 46, 48 by hot melt gluing or other removable means. Although three tooling balls are typically sufficient, more may be needed to overcome occultation problem in having at least three spherical surfaces available for image matching. They can be attached anywhere as long as they are visible to the laser when scanned from either side and as long as they do not obstruct the nozzle flow area locations or datum locations. The centers of these tooling balls serve as location points for matching or registering two different scans say, concave and convex surfaces scanned separately. It is also possible to match the scans without the use of the reference spheres 66; however, this increases the process time substantially.

A multi-axis controller 68, commonly used throughout various industries for accurate positioning during machining, measurement and other operations, carries the fixture 62 and first vane 114. The controller 68 comprises a servo 70 for driving a cross-slide 72 linearly about each of an X-axis 74 and a Y-axis 76, according to instructions from a computer 78. Since the cross-slides 72 move linearly within an X-Y plane only, movement within a Z-axis 80 is maintained constant. The controller 68 provides access to the airfoil 24 and endwalls 46, 48 without having to remove the first vane 114 from the fixture 62.

A laser spot projector 82 and a laser spot sensor 84 are mounted proximate to one another on one of the cross-slides 72. A small diameter laser beam 86, typically fifty micrometer or less, is directed from the spot projector 82 toward the first vane 114 and the sensor 84 receives a reflected light 88 back from the first vane 114. By measuring where the reflected light 88 contacts the sensor 84, the Z-axis 80 distance from the first vane 114 to the projector 82 may be calculated through triangulation. The z-axis 80 distance varies in response to changes in the topology of the first vane 114. A Keyence, LV series laser spot projector 82 and spot sensor 84 were used in the exemplary system 60.

The computer 78 comprises a memory device 90 and a processor 92, and is connected to the controller 68 via cables or a wireless connection. The computer 78 instructs the controller 68 to position the cross-slides 72 about the X-Y plane by means of the servos 70. Since the projector 82 and sensor 84 are mounted to one of the cross-slides 72, the laser beam 86 scans the first vane 114 as the cross-slides 72 traverse according to the instructions. The scan line density, or distance between constant X-axis 74 and Y-axis 76 scan positions (or scan lines), may be increased or decreased to produce a desired scan resolution. The processor 92 is programmed using C++ or any other suitable programming language.

While scanning the first vane 114, the sensor 84 outputs a calibrated Z-axis 80 distance as an analog voltage to the memory device 90. The corresponding, instantaneous X-axis 74 and Y-axis 76 distances are generated from the servos 70 driving the cross-slides 72. These three data sources: the X-axis 74 and Y-axis 76 distances from the servos 70 and the Z-axis 80 distance calibrated from the spot sensor 84, are captured continuously using a high-speed PC data bus and are stored in the memory device 90 as a series of digital coordinates.

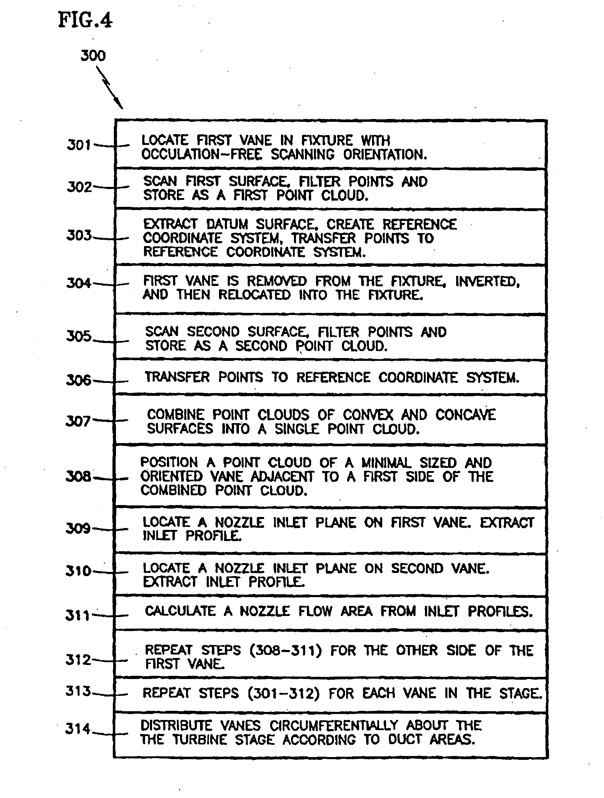

Accordingly, FIG. 4 illustrates a series of method steps 300 for measuring the flow area of a nozzle 50 of a first vane 114 using the system 60 described above.

In a first embodiment of a nozzle flow area measurement method 300, the nozzle 50 of a first vane 114 is measured in relation to a second, nominally sized and positioned vane 214. The second vane 214 is created using a computer aided design (CAD) system and sized according to nominal blueprint dimensions.

The first vane 114 is located in a fixture 62 in step 301 as shown in FIG. 3. Typically, three spheres 66, are attached to the vane 114, and serve as gage reference points for use in subsequent method steps. The first vane 114 is located so that a first, convex 38 or concave 40, surface is facing the laser spot projector 82 occultation-free, and that the distance from the first surface 38, 40 is within a proper scan depth distance from the projector 82. It does not matter if the convex 38 or concave 40 surface is scanned first. The scan depth is the calibrated distance from the projector 82 to the first vane 114 that results in the most accurate scan data. In the exemplary system 60, a scan depth of roughly 2.5 inches (6.35 centimeters) was used. If a highly twisted vane 14 is scanned, then a system with a higher depth of scan may be required.

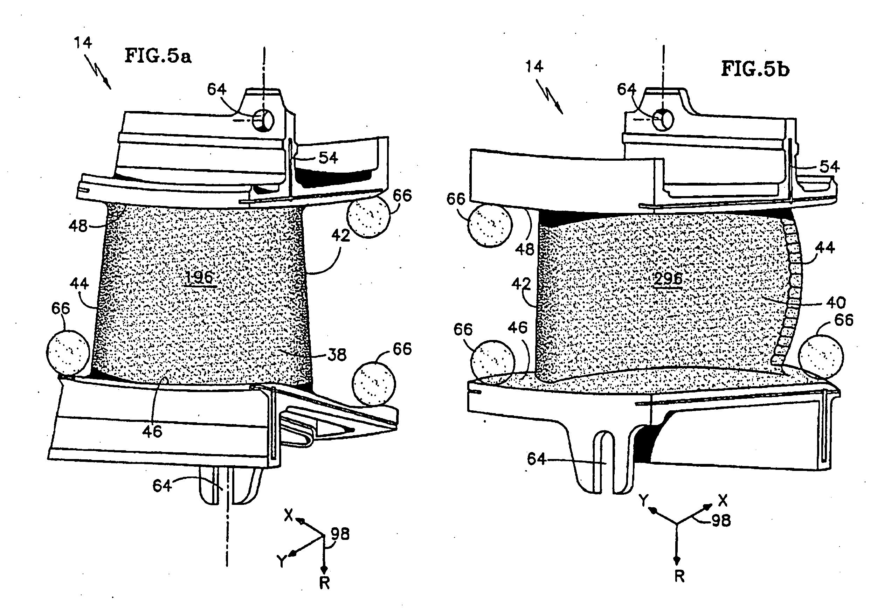

Referring now to step 302 and the examples illustrated in FIGS. 5a, 5b, the topography of the first surface 38 or 40 and the three spheres 66 are scanned into individual digital coordinate points 94 (shown in the figures as stippled shading), which are filtered to remove all outlying and extraneous points created by stray laser beam 86 reflections and system 60 noise. The points 94, are then combined into a first point cloud 196, which is stored in the memory device 90 for further manipulation by the processor 92.

Once the first point cloud 96 representing the first surface 38 or 40 is stored, the datum 64 surfaces are extracted in step 303 and a coordinate system 98 referencing these datum 64 surfaces, is constructed. All the points 94 in the first point cloud 196 are then transformed into the reference coordinate system 98.

The first vane 114 is removed from the fixture 62 and inverted, with the opposite surface 38 or 40 now facing the laser scanning system 60 in step 304. The three spheres 66 that are attached to the vane 114 should remain in the same location in the second scan without being disturbed as these are used for aligning and registering the two scans in subsequent steps. The first vane 114 is now located with a second, convex 38 or concave 40, surface visible by the laser spot projector 82 occultation-free, and within a proper scan depth distance from the projector 82.

The topography of the second surface 38 or 40 is next scanned into digital coordinate points 94 (shown as shading) in step 305, which are filtered to remove all outlying and extraneous points 94 created by stray laser beam 86 reflections and system 60 noise. The points 94 are combined into a second point cloud 296, which is stored in the memory device 90 for further manipulation by the processor 92.

Once the second point cloud 296 of the second surface 38 or 40 is stored, all the points 94 in the second point cloud 296 are then transformed in step 306 into the reference coordinate system 98 created in step 303. The three spherical tooling ball centers serve as gage points for matching the two scans into one scan in the next step. Now, both the first and second surfaces, 38 and 40, are stored as point clouds 196, 296 in the memory 92 and may be manipulated by the processor 92.

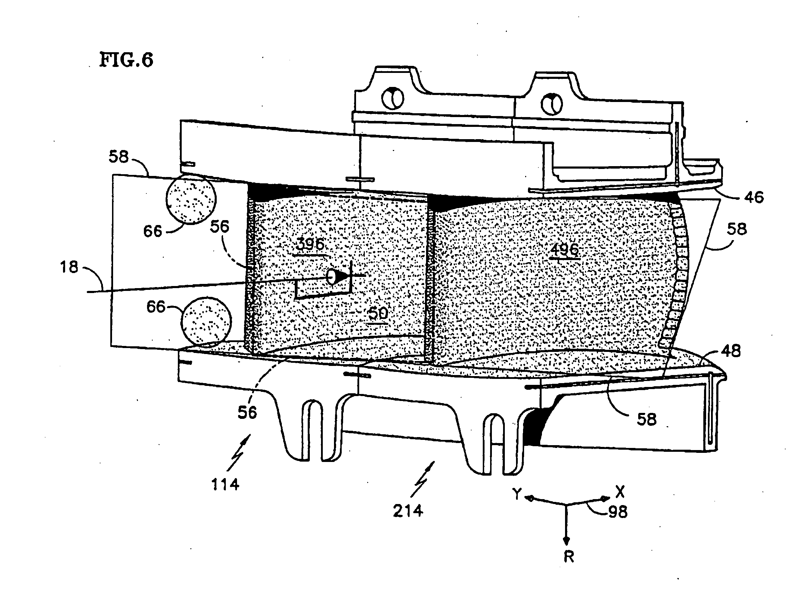

The point clouds 196 and 296 representing the first and second surfaces, 38 and 40, are combined in step 307 into a combined point cloud 396 (FIG. 6), using the gage points from the three aligned spheres 66 as a reference. The combined point cloud 396, representing the first vane 114, is stored in the memory for further manipulation.

A nominal point cloud 496 representing a nominally sized and oriented second vane 214 is positioned adjacent to a first side of the combined point cloud 396 in step 308. The positioning of the nominal point cloud 496 ensures that it is at a proper pitch distance and angular orientation from the combined point cloud 396 representing the first vane 114. The pitch distance is the distance between adjacent airfoils 24 and the angular orientation is measured with respect to the axial and radial planes of the engine.

An inlet plane 58 is located perpendicular to a combustion gas flow vector 18 direction at the nozzle 50 inlet in step 309. An inlet profile 56 is then extracted from the intersection of the inlet plane 55 and the combined point cloud 396 at the leading edge 42 and the outer 46 and inner 48 diameter end walls.

An inlet profile 100 of the second, nominal vane 214 is then extracted in step 310. The inlet profile is extracted from the intersection of the inlet plane 55 and the nominal point cloud 496 at the leading edge 42 and the outer 46 and inner 48 diameter endwalls.

The flow area of the nozzle 50 is calculated in step 311 from the area of the inlet profile 56 extracted from the combined point cloud 396 and the nominal point cloud 496. The area encompassed by the inlet profile 56 is calculated using one or more known numerical integration techniques. The flow area of the nozzle 50 for a second side of the first vane 114 is calculated in step 312 by repeating steps 308 through 311, with the nominal point cloud 496 located adjacent to the second side of the combined point cloud 396.

Steps 301 through 312 may be repeated in step 313 to obtain the nozzle flow areas of all the vanes 14 comprising a new or restored turbine vane stage. Once all the nozzle 50 flow areas are calculated and stored as described in the process steps outlined above, the individual nozzle 50 flow areas are sorted from smallest to largest and the vanes 14 are distributed circumferentially about the vane stage such that the difference in nozzle 50 flow area between any vane 14 and its adjacent neighbors is as small as possible. There are many known optimizers that accomplish this distribution once the nozzle 50 flow areas are measured.

In an alternate nozzle flow area measurement method 300, not according to the present invention, both first and second vanes 114, 214 are scanned as described in steps 301 through 307. The flow area of the nozzle 50 is then measured and calculated in relation to the first and second vanes 114, 214 and not in relation to a nominal vane. This provides an accurate measurement of the actual nozzle 50 flow area between the two vanes 114, 214.

While specific methods have been described in the context of accurately measuring and calculating nozzle flow area of first-stage, high-pressure turbine vanes, it is to be understood that other stages, low-pressure turbine vanes or even compressor stators would similarly benefit. Accordingly, the present invention is intended to embrace those alternatives, modifications and variations as fall within the broad scope of the appended claims.

## Claims

1. A method of determining a total nozzle flow area of a vane (14) comprising:
providing a scanning system (60);
scanning the vane (14) into a series of digital points with the system and storing the points as a combined point cloud (396) representing the vane;
positioning a nominal point cloud (496) representing a nominal vane (214) adjacent to a first side of the combined point cloud (396);
extracting a first inlet profile (56) at an intersection of a leading edge (42) of each point cloud (396, 496) and a plane (58) perpendicular to a mean fluid stream vector direction (18);
calculating a first inlet nozzle (50) flow area from the first inlet profile (56);
positioning the nominal point cloud (496) adjacent to a second side of the combined point cloud (396);
extracting a second inlet profile (100) at an intersection of the leading edge of each point cloud and the plane perpendicular to a mean fluid stream vector direction (18);
calculating a second inlet nozzle (50) flow area from the second inlet profile (100); and
determining a total nozzle (50) flow area from the first and second inlet nozzle flow areas.

2. The method of claim 1, wherein the scanning step comprises scanning a first surface (38) of the vane (14) into a series of digital points with the system, storing the points as a first point cloud (196), and scanning a second surface (40) of the vane (14) into a series of digital points with the system and storing the points as a second point cloud (296);
combining said first and second point clouds into a combined point cloud (396); and
storing said combined point cloud (396) representing the vane (14).

3. The method of claim 2, wherein one or more spheres (66) are also scanned with each of the first and second surfaces (38, 40).

4. The method of claim 3, wherein three spheres (66) are also scanned with each of the first and second surfaces (38, 40).

5. The method of claim 3 or 4, wherein the one or more scanned spheres (66) are used for aligning while combining the first and second point clouds (196, 296).

6. The method of any preceding claim, wherein the calculating steps further comprise performing numerical integration on said inlet profiles (56, 100).

7. The method of any preceding claim, wherein the positioning steps are performed at a nominal circumferential pitch and axial dimension.

8. The method of any preceding claim, wherein the scanning step further comprises transferring the combined point cloud (396) into a reference coordinate system.

9. The method of claim 1 for calculating a total nozzle flow area of a vane (114) with at least one pre-existing datum wherein:
said scanning system (60) includes a fixture (62), a multi-axis controller (70), a laser spot projector (82), a laser spot sensor (84), a memory device (90) and a processor (92); said method comprising
locating the vane (114) in the fixture (62) with a first side positioned towards the system;
scanning the first side of the vane by projecting a laser beam (86) from the laser spot projector (82) and receiving laser light reflections (88) with the spot sensor (84) while moving said projector (82) and said sensor (84) in relation to one or more reference spheres (66) and vane (114) with said controller (70);
storing said digital points in said memory device as a first point cloud (196) representing the at least one reference sphere (66) and first side defined in relation to the at least one datum;
relocating the vane (114) in the fixture (62) with a second side positioned towards the system;
scanning the one or more reference spheres (66) and the second side of the vane (114) by projecting a laser beam (86) from the laser spot projector (82) and receiving laser light reflections with the spot sensor (84) while moving said projector (82) and said sensor (84) in relation to the one or more spheres (66) and vane (114) with said controller (70);
storing digital points in said memory device (90) as a second point cloud (296) representing the at least one reference sphere (66) and second side defined in relation to the at least one datum;
translating the point clouds (196, 296) into a reference coordinate system;
merging the first point cloud with the second point cloud to create said combined point cloud (396);
positioning an inlet plane perpendicular to a fluid flow vector direction at a leading edge of the point clouds (196, 296);
extracting said first inlet profile representing the inlet nozzle periphery from the intersection of the inlet plane and the point clouds;
calculating a first inlet nozzle flow area from the first inlet profile using a mathematical technique; and
repeating the locating, positioning, extracting and calculating steps for the second side.

10. The method of claim 9, wherein each scanning step also scans at least one reference sphere (66).

11. The method of claim 10, wherein each scanning step also scans three reference spheres:

## Patentansprüche

1. Verfahren des Bestimmens eines gesamten Düsen-Strömungsquerschnitts einer Schaufel (14) aufweisend:
Bereitstellen eines Abtastsystems (60);
Abtasten der Schaufel (14) in eine Folge digitaler Punkte mit dem System und Speichern der Punkte als eine kombinierte Punktwolke (396), welche die Schaufel repräsentiert;
Positionieren einer nominalen Punktwolke (496), die eine nominale Schaufel (214) repräsentiert, neben einer ersten Seite der kombinierten Punktwolke (396);
Extrahieren eines ersten Einlaufprofils (56) an einem Schnitt eines vorderen Randes (42) jeder Punktwolke (396, 496) und einer Ebene (58), die rechtwinklig zu einer mittleren Fluidströmungsvektorrichtung (18) ist;
Berechnen eines ersten Einlaufdüsen (50)-Strömungsquerschnitts aus dem ersten Einlaufprofil (56);
Positionieren der nominalen Punktwolke (496) neben einer zweiten Seite der kombinierten Punktwolke (396);
Extrahieren eines zweiten Einlaufprofils (100) an einem Schnitt des vorderen Randes jeder Punktwolke und der Ebene, die rechtwinklig zu einer mittleren Fluidströmungsvektorrichtung (18) ist;
Berechnen eines zweiten Einlaufdüsen (50)-Strömungsquerschnitts aus dem zweiten Einlaufprofil (100); und
Bestimmen eines gesamten Düsen (50)-Strömungsquerschnitts aus dem ersten und dem zweiten Einlaufdüsen-Strömungsquerschnitt.

2. Verfahren nach Anspruch 1, wobei der Abtastschritt Abtasten einer ersten Fläche (38) der Schaufel (14) in eine Folge von digitalen Punkten mit dem System, Speichern der Punkte als eine erste Punktwolke (196) und Abtasten einer zweiten Fläche (40) der Schaufel (14) in eine Serie von digitalen Punkten mit dem System und Speichern der Punkte als eine zweite Punktwolke (296);
Kombinieren der ersten und der zweiten Punktwolke in eine kombinierte Punktwolke (396); und
Speichern der kombinierten Punktwolke (396), welche die Schaufel (14) repräsentiert, einschließt.

3. Verfahren nach Anspruch 2, wobei mit jeder der ersten und der zweiten Fläche (38, 40) auch eine oder mehrere Kugeln (66) abgetastet werden.

4. Verfahren nach Anspruch 3, wobei mit jeder der ersten und der zweiten Fläche (38, 40) auch drei Kugeln (66) abgetastet werden.

5. Verfahren nach Anspruch 3 oder 4, wobei die eine oder mehreren abgetastete Kugeln (66), während die erste und die zweite Punktwolke (196, 296) kombiniert werden, zum Ausrichten benutzt werden.

6. Verfahren nach einem der vorangehenden Ansprüche, wobei die Berechnungsschritte zusätzlich einschließen, auf den Einlaufprofilen (56, 100) numerische Integration vorzunehmen.

7. Verfahren nach einem der vorangehenden Ansprüche, wobei die Positionierungsschritte bei einer nominalen Umfangsteilung und axialer Abmessung vorgenommen werden.

8. Verfahren nach einem der vorangehenden Ansprüche, wobei der Abtastschritt zusätzlich einschließt, die kombinierte Punktwolke (396) in ein Referenzkoordinatensystem zu übertragen.

9. Verfahren nach Anspruch 1 zum Berechnen eines gesamten Düsen-Strömungsquerschnitts einer Schaufel (114) mit wenigstens einem vorher existierenden Datum, wobei:
das Abtastsystem (60) eine Halterung (62), eine vielachsige Steuerung (70), einen Laserpunktprojektor (82), einen Laserpunktsensor (84), eine Speichervorrichtung (90) und einen Prozessor (92) einschließt; wobei das Verfahren einschließt:
Anordnen der Schaufel (114) in der Halterung (62), so dass eine erste Seite in Richtung auf das System angeordnet ist;
Abtasten der ersten Seite der Schaufel durch Projizieren eines Laserstrahls (86) von dem Laserpunktprojektor (82) und Empfangen von Laserlichtreflektionen (88) mit dem Punktsensor (84), während der Projektor (82) und der Sensor (84) im Bezug auf die eine oder mehreren Referenzkugeln (66) und die Schaufel (114) mit der Steuerung (70) bewegt werden;
Speichern der Digitalpunkte in der Speichervorrichtung als eine erste Punktwolke (196), welche die wenigstens eine Referenzkugel (66) und die erste Seite, die in Bezug auf das wenigstens eine Datum definiert ist, repräsentiert;
erneutes Anordnen der Schaufel (114) in der Halterung (62), so dass eine zweite Seite in Richtung auf das System angeordnet ist;
Abtasten der einen oder mehreren Referenzkugeln (66) und der zweiten Seite der Schaufel (114) durch Projizieren eines Laserstrahls (86) von dem Laserpunktprojektor (82) und Empfangen von Laserlichtreflektionen mit dem Punktsensor (84), während der Projektor (82) und der Sensor (84) im Bezug auf die eine oder mehreren Kugeln (66) und die Schaufel (114) mit der Steuerung (70) bewegt werden;
Speichern digitaler Punkte in der Speichervorrichtung (90) als eine zweite Punktwolke (296), welche die wenigstens eine Referenzkugel (66) und die zweite Seite, die in Bezug auf das wenigstens eine Datum definiert ist, repräsentiert;
Übertragen der Punktwolken (196, 296) in ein Referenzkoordinatensystem;
Zusammenfügen der ersten Punktwolke mit der zweiten Punktwolke, um die kombinierte Punktwolke (396) zu erzeugen;
Positionieren einer Einlaufebene in einem rechten Winkel zu einer Fluidflußvektorrichtung an einem vorderen Rand der Punktwolken (196, 296);
Extrahieren des ersten Einlaufprofils, das die Umgebung der Einlaufdüse repräsentiert, aus dem Schnitt der Einlaufebene und der Punktwolken;
Berechnen eines ersten Einlaufdüsen (50)-Strömungsquerschnitts aus dem ersten Einlaufprofil unter Benutzung einer mathematischen Methode; und
Wiederholen der Anordnungs-, Positionierungs-, Extrahierungs- und Berechnungsschritte für die zweite Seite.

10. Verfahren nach Anspruch 9, wobei jeder Abtastschritt auch wenigstens eine Referenzkugel (66) abtastet.

11. Verfahren nach Anspruch 10, wobei jeder Abtastschritt auch drei Referenzkugeln abtastet.

## Revendications

1. Procédé pour déterminer une zone de flux totale d'une aube (14), comprenant:
la mise en place d'un système de balayage (60);
le balayage d'une aube (14) dans une série de points numériques en utilisant le système et le stockage des points sous la forme d'un nuage de points combiné (396) qui représente l'aube;
le positionnement d'un nuage de points nominal (496) qui représente une aube nominale (214) à proximité d'un premier côté du nuage de points combiné (396);
l'extraction d'un premier profil d'entrée (56) à une intersection d'un bord avant (42) de chaque nuage de points (396, 496) et d'un plan (58) qui est perpendiculaire à une direction vectorielle de courant de fluide moyen (18);
le calcul d'une première zone de flux d'entrée (50) à partir du premier profil d'entrée (56);
le positionnement du nuage de points nominal (496) à proximité d'un deuxième côté du nuage de points combiné (396);
l'extraction d'un deuxième profil d'entrée (100) à une intersection du bord avant de chaque nuage de points et du plan perpendiculaire à une direction vectorielle de courant de fluide moyen (18);
le calcul d'une deuxième zone de flux d'entrée (50) à partir du deuxième profil d'entrée (100); et
la détermination d'une zone de flux totale (50) à partir des première et deuxième zones d'entrée.

2. Procédé selon la revendication 1, dans lequel l'étape de balayage comprend le balayage d'une première surface (38) de l'aube (14) dans une série de points numériques en utilisant le système, le stockage des points sous la forme d'un premier nuage de points (196), et le balayage d'une deuxième surface (40) de l'aube (14) dans une série de points numériques en utilisant le système, et le stockage des points sous la forme d'un deuxième nuage de points (296);
la combinaison desdits premier et deuxième nuages de points en un nuage de points combiné (396); et
le stockage dudit nuage de points combiné (396) qui représente l'aube (14).

3. Procédé selon la revendication 2, dans lequel une ou plusieurs sphère(s) (66) est (sont) également balayée(s) avec chacune des première et deuxième surfaces (38, 40).

4. Procédé selon la revendication 3, dans lequel trois sphères (66) sont également balayées avec chacune des première et deuxième surfaces (38, 40).

5. Procédé selon la revendication 3 ou 4, dans lequel ladite/lesdites une ou plusieurs sphère(s) balayée(s) (66) est (sont) utilisée(s) pour aligner tout en les combinant les premier et deuxième nuages de points (196, 296).

6. Procédé selon l'une quelconque des revendications précédentes, dans lequel les étapes de calcul comprennent en outre l'exécution d'une intégration numérique sur lesdits profils d'entrée (56, 100).

7. Procédé selon l'une quelconque des revendications précédentes, dans lequel les étapes de positionnement sont exécutées à un pas circonférentiel nominal et à une dimension axiale nominale.

8. Procédé selon l'une quelconque des revendications précédentes, dans lequel l'étape de balayage comprend en outre le transfert du nuage de points combiné (396) dans un système de coordonnées de référence.

9. Procédé selon la revendication 1 pour calculer une zone de flux totale d'une aube (114) en utilisant au moins une données préexistante, dans lequel:
ledit système de balayage (60) comprend une fixation (62), un dispositif de commande à axes multiples (70), un projecteur de point laser (82), un capteur de point laser (84), un dispositif de mémoire (90) et un processeur (92); ledit procédé comprenant:
l'installation de l'aube (114) dans la fixation (62) avec un premier côté qui est orienté en direction du système;
le balayage du premier côté de l'aube en projetant un faisceau laser (86) à partir dudit projecteur de point laser (82) et en recevant des réflexions de lumière laser (88) avec le capteur de point laser (84) tout en déplaçant ledit projecteur (82) et ledit capteur (84) par rapport à ladite/auxdites une ou plusieurs sphère(s) (66) et à l'aube (114) à l'aide dudit dispositif de commande (70);
le stockage desdits points numériques dans ledit dispositif de mémoire sous la forme d'un premier nuage de points (196) qui représente ladite au moins une sphère de référence (66) et un premier côté défini par rapport à ladite au moins une donnée;
la réinstallation de l'aube (114) dans la fixation (62) avec un deuxième côté qui est orienté en direction du système;
le balayage d'une ou de plusieurs sphère(s) de référence (66) et du deuxième côté de l'aube (114) en projetant un faisceau laser (86) à partir du projecteur de point laser (82) et en recevant des réflexions de lumière laser avec le capteur de point laser (84) tout en déplaçant ledit projecteur (82) et ledit capteur (84) par rapport à ladite/auxdites une ou plusieurs sphère(s) (66) et à l'aube (114) à l'aide dudit dispositif de commande (70);
le stockage de points numériques dans ledit dispositif de mémoire (90) sous la forme d'un deuxième nuage de points (296) qui représente ladite au moins une sphère de référence (66) et un deuxième côté défini par rapport à ladite au moins une donnée;
le transfert des nuages de points (196, 296) dans un système de coordonnées de référence;
la fusion du premier nuage de points avec le deuxième nuage de points pour créer ledit nuage de points combiné (396);
le positionnement d'un plan d'entrée perpendiculaire à une direction vectorielle d'écoulement de fluide à un bord avant des nuages de points (196, 296);
l'extraction dudit premier profil d'entrée qui représente la périphérie de zone de flux d'entrée à partir de l'intersection du plan d'entrée et des nuages de points;
le calcul d'une première zone de flux d'entrée à partir du premier profil d'entrée en utilisant une technique mathématique; et
la répétition des étapes de mise en place, de positionnement, d'extraction et de calcul pour le deuxième côté.

10. Procédé selon la revendication 9, dans lequel chaque étape de balayage balaye aussi au moins une sphère de référence (66).

11. Procédé selon la revendication 10, dans lequel chaque étape de balayage balaye aussi trois sphères de référence.
